# EUROPÄISCHE PATENTANMELDUNG

(11) **EP 4 692 964 A1**
(43) Veröffentlichungstag der Anmeldung: **11.02.2026**
(21) Anmeldenummer: 24193021.3
(22) Anmeldetag: 06.08.2024
(51) Int. Cl.: G05B 19/4061

(54) **COMPUTERIMPLEMENTIERTES VERFAHREN ZUR STEUERUNG EINER MASCHINE**

(71) Anmelder: MCU GmbH & Co. KG, 88167 Maierhöfen (DE)
(72) Erfinder: Dowe, Martin, 88167 Maierhöfen (DE)
(74) Vertreter: VKK Patentanwälte PartG mbB

(57) **Zusammenfassung**

Die vorliegende Erfindung betrifft ein computerimplementiertes Verfahren zur Steuerung einer Maschine, umfassend die folgenden Schritte: a) Einlesen von neuen Grunddaten eines Werkzeuges und/oder eines Bewegungsvorgangs des Werkzeuges; b) Auslesen einer Datenbank nach früheren Grunddaten des Werkzeugs und/oder des Bewegungsvorganges; c) Vergleichen der neuen Grunddaten und der früheren Grunddaten unter Ermittlung von Abweichungsdaten; d) Verifizieren der neuen Grunddaten mittels der ermittelten Abweichungsdaten; e1) Freigeben oder Blockieren des Werkzeuges unmittelbar nach dem Verifizieren der neuen Grunddaten und/oder vor dem Einsatz des Werkzeuges in der Maschine und/oder e2) Freigeben oder Blockieren des Bewegungsvorgangs unmittelbar nach dem Verifizieren der neuen Grunddaten und/oder vor dem Durchführen des Bewegungsvorgangs in der Maschine.

## Beschreibung

Die vorliegende Erfindung betrifft ein computerimplementiertes Verfahren zur Steuerung einer Maschine, wobei neue Grunddaten eines Werkzeuges und/oder eines Bewegungsvorganges des Werkzeuges eingelesen und mit früheren Grunddaten des Werkzeuges und/oder des Bewegungsvorganges unter Ermittlung von Abweichungsdaten verglichen werden, sodass die neuen Grunddaten mittels der Abweichungsdaten verifiziert und das Werkzeug und/oder der Bewegungsvorgang freigegeben oder blockiert werden.

Im Bereich der Großserienfertigung mit CNC-Maschinen entstehen oft hohe Instandhaltungskosten, die auf Kollisionen an den Maschinen zurückzuführen sind. Innerhalb dieser Patentanmeldung wird unter dem Begriff Kollision das Kollidieren von Maschinenteilen untereinander oder das Kollidieren von einem Maschinenteil mit einem Werkzeug verstanden. Eine der Hauptursachen dieser Kollisionen sind fehlerhafte Eingaben durch einen Nutzer insbesondere von Korrekturdaten oder Wiedereinstiegsdaten in einen unterbrochenen Bewegungsvorgang.

Aus dem Stand der Technik sind zur Kollisionsprävention Steuerungen bekannt, die einen Bewegungsvorgang, beispielsweise einen Zerspanungsvorgang, vorausberechnen und dadurch potentielle Kollisionen frühzeitig erkennen und verhindern. Weiter sind Sensoren, insbesondere Beschleunigungssensoren bekannt, mittels derer dynamische Kollisionen innerhalb weniger Millisekunden erkannt und ein Schaden an Werkzeug und Maschinenteilen möglichst geringgehalten wird. Darüber hinaus werden bekannterweise zur Kollisionsvermeidung Zyklen numerischer Steuerungen (NC-Zyklen) manuell und direkt an der entsprechenden NC-Maschine gepflegt, indem sie insbesondere mit Tabellenwerten verglichen werden.

WO 2010/017663 A1 betrifft ein Verfahren zur Vermeidung einer Kollision einer CNC-Werkzeugmaschine, wobei eine Veränderung in einem Arbeitszustand der CNC-Werkzeugmaschine erkannt wird, tatsächliche Parameter aus einem Verifizierungscomputer ausgelesen werden, der momentane Programminhalt dekodiert wird und Bewegungspfade erzeugt werden, wobei eine Verarbeitungssimulation durchgeführt wird mittels derer bestimmt wird, ob eine Kollision auftritt.

Nachteilig an dem bekannten Stand der Technik sind der hohe Daten- und Rechenaufwand und die dadurch oft notwendige Verwendung externer Rechner. Darüber hinaus ist die manuelle Pflege von NC-Zyklen ausschließlich von geschultem Personal durchführbar und erfordert zur stetigen Aktualisierung der Daten einen hohen Arbeitsaufwand und verursacht damit hohe Instandhaltungskosten. Weiter ist durch die Verwendung von bekannter Sensorik eine Kollision lediglich schnell erkennbar, allerdings nicht verhinderbar.

Der vorliegenden Erfindung liegt daher die Aufgabe zugrunde, ein kostengünstiges, einfaches und ressourcenschonendes Verfahren zur Steuerung einer Maschine zur Vermeidung von Kollisionen im Serienbetrieb bereitzustellen.

Diese Aufgabe wird durch ein computerimplementiertes Verfahren zur Steuerung einer Maschine gelöst, umfassend die folgenden Schritte:
a) Einlesen von neuen Grunddaten eines Werkzeuges und/oder eines Bewegungsvorgangs des Werkzeuges;
b) Auslesen einer Datenbank nach früheren Grunddaten des Werkzeugs und/oder des Bewegungsvorganges;
c) Vergleichen der neuen Grunddaten und der früheren Grunddaten unter Ermittlung von Abweichungsdaten;
d) Verifizieren der neuen Grunddaten mittels der ermittelten Abweichungsdaten;
e1) Freigeben oder Blockieren des Werkzeuges unmittelbar nach dem Verifizieren der neuen Grunddaten und/oder vor dem Einsatz des Werkzeuges in der Maschine und/oder
e2) Freigeben oder Blockieren des Bewegungsvorgangs unmittelbar nach dem Verifizieren der neuen Grunddaten und/oder vor dem Durchführen des Bewegungsvorgangs in der Maschine.

Das erfindungsgemäße Verfahren wird vorteilhaft nach jeder Eingabe von neuen Grunddaten eines Werkzeuges und/oder eines Bewegungsvorganges erneut automatisiert gestartet. Je nachdem, welche Grunddaten verändert werden, wird die Verwendung eines Werkzeuges und/oder eines Bewegungsvorganges in der Maschine beeinflusst. Üblicherweise ist zu jedem Werkzeug eine Standmenge und/oder Standzeit definiert, bei deren Erreichen das Werkzeug ausgetauscht werden muss. Die Standmenge definiert eine bestimmte Anzahl an, mit dem Werkzeug produzierten, Teilen, die Standzeit definiert ein Zeitintervall, in welchem das Werkzeug im Einsatz ist. Beim Tauschen eines Werkzeuges wird dieses aus der Maschine entnommen und von einem Werkzeughalter getrennt. Anschließend wird ein neues Werkzeug in dem Werkzeughalter aufgenommen und die Kombination aus Werkzeughalter und Werkzeug wird gemeinsam in die Maschine eingesetzt. Insbesondere bei der Aufnahme des neuen Werkzeuges in den Werkzeughalter ist eine exakte Positionierung zwischen diesen beiden Komponenten in der Realität nicht umsetzbar, wonach sich Grunddaten des Werkzeuges, insbesondere eine Werkzeuglänge ändern. Insbesondere werden bei solch einem Werkzeugwechsel zum einen die Grunddaten des Werkzeuges und zum anderen die Grunddaten des Bewegungsvorganges geändert, innerhalb welchem dieses Werkzeug benutzt wird. Bestimmte Grunddaten sind demnach Werkzeuggrunddaten und gleichzeitig Bewegungsgrunddaten bzw. beeinflussen diese. Die erfindungsgemäße Maschine ist bevorzugt eine Zerspanungsmaschine und der erfindungsgemäße Bewegungsvorgang ist bevorzugt ein Zerspanungsvorgang. Weiter ist die erfindungsgemäße Maschine bevorzugt ein Roboter und der erfindungsgemäße Bewegungsvorgang eine Roboterbewegung. Das erfindungsgemäße Verfahren zu Steuerung der Maschine wird vorteilhaft auf einem Steuerungsrechner ausgeführt, welcher insbesondere in der Maschine verbaut ist. Vorteilhafterweise ist der Steuerungsrechner auch nachträglich in die Maschine integrierbar. Die Maschine an sich und der Steuerungsrechner sind vorteilhaft jeweils ein Teilsystem eines verteilten Systems. Vorteil von verteilten Systemen im Allgemeinen sind die Möglichkeit zur Aufteilung von Aufgaben an entsprechend vorhandene Ressourcen der Teilsysteme und deren Datenaustausch untereinander über ein Netzwerk. Demnach ist es auch möglich, Steuerungsrechner und Maschinen mit kleineren Rechen- und Speicherressourcen in das System zu implementieren. Das Einlesen der neuen Grunddaten wird durch eine externe Aktion in dem erfindungsgemäßen Verfahren zur Steuerung der Maschineausgelöst. Unmittelbar nach dem Auslösen des Verfahrens wird der Einlesevorgang durchgeführt, wobei erkannt wird, ob es sich um neue Grunddaten von einem Werkzeug und/oder von einem Bewegungsvorgang handelt. Ebenfalls wird geprüft, ob zu dem Werkzeug und/oder dem Bewegungsvorgang bereits frühere Grunddaten existieren. Dies erfolgt, indem eine Abfrage an eine Datenbank gesendet wird. Existieren frühere Grunddaten, werden diese aus der Datenbank ausgelesen. Vorteilhafterweise umfasst der Steuerungsrechner die Datenbank. Eine dezentrale Durchführung des Verfahrens innerhalb des Steuerungsrechners ist von Vorteil, da ein globaler Datenaustausch und damit die Netzwerkbelastung verringert wird und Sicherheitsrisiken (Security) insbesondere durch externe Schad-Software minimiert werden. Im Anschluss werden die neuen Grunddaten und die früheren Grunddaten verglichen, wobei das Vergleichen je nach Datentyp der Grunddaten unterschiedlich durchgeführt wird. Skalarwerte als Grunddaten werden insbesondere über deren Subtraktion miteinander verglichen, wobei die dabei resultierende Differenz den Abweichungsdaten entspricht. Das Verifizieren erfolgt mittels der ermittelten Abweichungsdaten, wobei diese insbesondere einem vordefinierten Verifikationswert gegenübergestellt werden, bzw. auf ihren vordefinierten Verifikationsgrad geprüft werden. Beispielsweise wird ein Name als Grunddaten einem Verifikationsgrad gegenübergestellt, wobei der Name als Identifikator des Werkzeuges definiert ist. Der neue Name muss demnach zu 100% dem früheren Namen entsprechen. Die Schritte e1) und e2) sind Alternativen, die zeitgleich miteinander, versetzt zueinander oder unmittelbar nacheinander stattfinden. Weiter erfolgt das Freigeben oder Blockieren des Werkzeuges bevorzugt unmittelbar vor dem Einsatz des Werkzeuges in der Maschine. Mit Einsatz wird die Verwendung des Werkzeuges innerhalb der Maschine für einen Bearbeitungsvorgang an einem Werkstück verstanden, wobei für jeden Einsatz des Werkzeuges bevorzugt jeweils ein Bewegungsvorgang des Werkzeuges definiert ist. Das Freigeben oder Blockieren des Bewegungsvorganges erfolgt ebenso bevorzugt unmittelbar vor dem Durchführen des Bewegungsvorganges in der Maschine. Es ist demnach möglich, dass durch als nicht verifiziert geltende Grunddaten das Werkzeug unmittelbar nach dem Verifizieren der neuen Grunddaten blockieren wird, wobei durch die als nicht verifiziert geltenden Grunddaten der Bewegungsvorgang des Werkzeugs erst unmittelbar vor dem Durchführen des Bewegungsvorganges in der Maschine blockiert wird.

In Weiterbildung der Erfindung umfasst das Verfahren ein Ausgeben mindestens eines Signals unmittelbar nach dem Verifizieren der neuen Grunddaten und/oder unmittelbar vor dem Durchführen des Bewegungsvorgangs und/oder vor dem Einsatz des Werkzeugs in der Maschine. Das ausgegebene Signal ist bevorzugt ein visuelles und/oder akustisches Signal. Abhängig von den Grunddaten, die als nicht verifiziert gelten, an sich oder von der Höhe der Abweichungsdaten wird das Signal zu den bevorzugten Zeitpunkten ausgegeben. Ist beispielsweise eine weitere Verwendung der Maschine an sich durch die als nicht verifiziert geltenden Grunddaten eingeschränkt, wird das mindestens eine Signal unmittelbar nach dem Verifizieren ausgegeben. Ist andernfalls beispielsweise eine weitere Verwendung der Maschine an sich vorerst uneingeschränkt trotz der nicht als verifiziert geltenden Grunddaten möglich, so wird das Signal erst unmittelbar vor dem Zeitpunkt ausgegeben, an dem es zu einem Fehlverhalten und potentiell zu einer Kollision aufgrund der nicht als verifiziert geltenden Grunddaten kommt. Das Ausgeben des mindestens einen Signals erfolgt bevorzugt gleichzeitig mit dem Blockieren oder Freigeben des Werkzeuges und/oder dem Blockieren oder Freigeben des Bewegungsvorganges.

Vorteilhafterweise umfasst das Verfahren ein Auffordern zur Korrektur der als nicht verifiziert geltenden neuen Grunddaten und/oder eine Bestätigung der als nicht verifiziert geltenden neuen Grunddaten. Je nach Autorisierungsgrad eines Nutzers ist es möglich, dass die Aufforderung zur Korrektur der als nicht verifiziert geltenden neuen Grunddaten ignoriert wird und die neuen Grunddaten als verifiziert geltend bestätigt werden. Das Auffordern erfolgt vorteilhaft über ein an einen Nutzer gerichtetes visuelles oder akustisches Signal insbesondere an einem Human-Machine-Interface (HMI) der Maschine. Das HMI ist in einer weiteren Ausführungsform als Teilsystem innerhalb eines mit der Maschine gemeinsamen Systems ausgelagert und über ein Netzwerk mit der Maschine verbunden, sodass die Maschine für einen Nutzer auch remote bedienbar ist. Der Autorisierungsgrad eines Nutzers ist bevorzugt vordefiniert und kann entweder auf dem Steuerungsrechner, innerhalb der Maschine oder in einem anderen Teilsystem des Systems, insbesondere der Datenbank hinterlegt sein und von dem Steuerungsrechner werden. Nach der Bestätigung der als nicht verifiziert geltenden neuen Grunddaten durch einen Nutzer, gelten diese als verifiziert.

In Weiterbildung der Erfindung umfasst das Verfahren ein Protokollieren und Speichern mindestens des Verifizierungsschrittes und/oder des Korrekturschrittes. Um nicht nur die Grunddaten an sich, sondern auch das Verfahren zur Steuerung einer Maschine zur Verhinderung von Kollisionen zu überwachen, werden mindestens der Verifizierungsschritt und/oder der Korrekturschritt protokolliert und gespeichert. Das Speichern erfolgt insbesondere in der Datenbank, um die Speicherkapazitäten des Steuerungsrechners zu schonen. Ebenfalls möglich ist das Protokollieren und Speichern sämtlicher erfindungsgemäßer Schritte des Verfahrens, um eine bestmögliche Nachvollziehbarkeit zu erreichen. Während des Protokollierens werden die in dem Steuerungsrechner erfolgten Schritte zusammengefasst, sodass der wesentliche Inhalt aus diesen protokollierten Daten entnehmbar ist, der notwenige Speicherplatz allerdings möglichst gering ist.

In einer besonders vorteilhaften Ausgestaltung der Erfindung werden die früheren Grunddaten mit den neuen Grunddaten überschrieben und/oder die neuen Grunddaten als frühere Grunddaten in der Datenbank gespeichert. Je nach Art der Grunddaten ist es sinnvoll, eine Historie der Veränderungen der Grunddaten zu speichern, um im Fehlerfall nachzuvollziehen, wann diese fehlerhaften Änderungen erfolgt sind. Dies ist insbesondere dann vorteilhaft, wenn ein Nutzer zur Korrektur der als nicht verifiziert geltenden neuen Grunddaten aufgefordert wurde, diese allerdings abgelehnt wurde bzw. die als nicht verifiziert geltenden neuen Grunddaten bestätigt wurden. Ein Überschreiben der früheren Grunddaten mit den neuen Grunddaten ist dann sinnvoll, wenn ausschließlich die neuen bzw. aktuellen Grunddaten für das weitere Verfahren relevant sind. Beispielsweise ist dies der Fall, wenn ein neues Werkzeug zur Maschine hinzugefügt wird und sich damit die Grunddaten zur Anzahl an gespeicherten Werkzeugen ändern. Die neuen Grunddaten werden als frühere Grunddaten gespeichert, sodass diese während einem darauffolgenden erneuten Starten des erfindungsgemäßen Verfahrens als frühere Grunddaten aus der Datenbank ausgelesen werden. Die ehemaligen früheren Grunddaten werden entweder gelöscht oder in der Datenbank als archivierte Grunddaten gespeichert. Demnach werden sämtliche Grunddaten innerhalb des erfindungsgemäßen Verfahrens ausschließlich zweimal verwendet, einmal als neue Grunddaten und einmal als frühere Grunddaten.

In Weiterbildung der Erfindung umfasst das Verfahren ein Speichern der neuen Grunddaten in einem Zwischenspeicher unmittelbar nach dem Einlesen. In vorteilhafter Weise ist der Zwischenspeicher in dem Steuerungsrechner integriert, sodass das Vergleichen der neuen Grunddaten und der früheren Grunddaten direkt nach dem Auslesen der früheren Grunddaten aus der Datenbank beginnt. Der Zwischenspeicher wird vorteilhaft nach dem Vergleichen der neuen und früheren Grunddaten gelöscht, sodass dieser keine hohe Speicherkapazitäten benötigt und das Verfahren ressourcenschonend bleibt. Die neuen Grunddaten werden bevorzugt ab dem Einlesen in dem Zwischenspeicher so lange gespeichert, bis sie korrigiert wurden und/oder als verifiziert gelten. Ausschließlich als verifiziert geltende Grunddaten werden in der Datenbank abgespeichert.

In einer bevorzugten Ausführungsform der Erfindung sind die Grunddaten Werkzeuggrunddaten und/oder Bewegungsvorgangsgrunddaten, wobei die Werkzeugrunddaten ausgewählt sind aus der Gruppe Anzahl an gespeicherten Werkzeugen, Werkzeugbezeichnungen, Längenkorrekturdaten, Radiuskorrekturwerte, Bedienschritte, Nullpunktverschiebungen, wobei die Bewegungsvorgangsgrunddaten ausgewählt sind aus der Gruppe programmspezifischer Ablauf, Änderungen in der Ablaufkodierung. Zum Vergleichen und Verifizieren der Grunddaten ist es relevant für das Verfahren den Datentyp der entsprechenden Grunddaten zu kennen. Als Datentypen sind insbesondere Skalare, Binärdaten, Arrays oder Strings möglich. Je nach Datentyp der Grunddaten werden diese unterschiedlich verglichen, sodass die Abweichungsdaten ebenfalls unterschiedliche Datentypen haben. Das Verifizieren anhand der Abweichungsdaten erfolgt demnach ebenfalls Datentyp abhängig. Skalare Grunddaten wie insbesondere die Längenkorrekturdaten, Radiuskorrekturwerte und die Anzahl der gespeicherten Werkzeuge sind zumeist über einen Bereich zulässig veränderbar, sodass die neuen Grunddaten als verifiziert gelten. Bei dem programmspezifischen Ablauf als Bewegungsgrunddaten wird insbesondere ein Wiedereinstiegspunkt in den Bewegungsvorgang mit einem entsprechenden vorhergehenden Ausstieg aus dem Bewegungsvorgang verglichen. Während dem Verifizieren wird ermittelt, ob es sich um einen gültigen Wiedereinstiegspunkt und das zu diesem Wiedereinstiegspunkt passende Werkzeug handelt. Ein gültiger Wiedereinstiegspunkt ist insbesondere ein Zeitpunkt unmittelbar nach einem Werkzeugwechsel.

In Weiterbildung der Erfindung ist vorgesehen, dass die neuen Grunddaten von der Eingabe eines Nutzers oder von RFID-Chips oder von Teilsystemen eingelesen werden. Mit Vorteil werden nur die neuen Grunddaten in den Steuerungsrechner aus der Eingabe eines Nutzers oder von RFID-Chips oder von anderen Teilsystem, bspw. anderen Maschinen mit Steuerungsrechnern oder einer Datenbank, eingelesen, die für das erfindungsgemäße Verfahren relevant sind. Mit Vorteil wird hierbei die Datenmenge und demnach die Notwendigkeit einer hohen Rechenleistung und Ressourcen effizient reduziert. Die Eingabe eines Nutzers erfolgt bevorzugt über das Human-Machine-Interface (HMI), welches insbesondere auch ein Teilsystem bildet. Die zum Einlesen von RFID-Chips notwendige Sensorik kann ebenfalls direkt in der Maschine integriert sein, oder ein weiteres Teilsystem bilden, welches über das Netzwerk die entsprechenden Daten an den Steuerungsrechner weiterleitet. Mit Vorteil umfasst jedes Werkzeug einen RFID-Chip, um dessen Werkzeuggrunddaten darauf zu speichern. Der RFID-Chip es demnach ebenfalls als eine werkzeugspezifische Datenbank zu verstehen, welche auslesbar und insbesondere auch editierbar ist. Der RFID-Chip selbst bildet ebenfalls ein Teilsystem.

Es ist weiter in vorteilhafter Weise vorgesehen, dass skalare neue Grunddaten als verifiziert gelten, wenn die Abweichungsdaten unter einem Grenzwert liegen, wobei die skalaren neuen Grunddaten als nicht verifiziert gelten, wenn die Abweichungsdaten über dem Grenzwert liegen. Vorteilhafterweise definiert der Grenzwert einen Betrag. Sofern ein Betrag der Abweichungsdaten diesen nicht überschreitet, gelten die entsprechenden neuen Grunddaten als verifiziert. Ebenfalls ist es möglich, dass die Grenzwerte asymmetrisch zu dem skalaren Wert der früheren Grunddaten definiert sind. Insbesondere ist der Wert der früheren Grunddaten der Grenzwert, insbesondere ein oberer oder unterer Grenzwert. Dies ist insbesondere auch bei binären Grunddaten anwendbar. Sobald die Abweichungsdaten demnach ungleich null sind, gelten die Grunddaten nicht länger als verifiziert. In einer weiteren Ausgestaltung der Erfindung ist es vorteilhaft, den Grenzwert für einen skalaren Wert der Grunddaten auf einen konstanten Wert zu setzen, wobei der Grenzwert mindestens über den gesamten Einsatz des Werkzeuges und/oder die Durchführung des Bewegungsvorganges hinweg beibehalten wird.

In einer vorteilhaften Ausgestaltung der Erfindung ist der Grenzwert in der Datenbank gespeichert. Ein Speichern der Grenzwerte sowie ein Speichern der Abweichungsdaten von Grunddaten in einer globalen Datenbank ist vorteilhaft, sofern eine Vielzahl an Maschinen dieselben Werkzeuge und/oder dieselben Bewegungsvorgänge verwenden. Der Zugriff auf die Datenbank ist vorteilhaft ausschließlich durch einen autorisierten Nutzer möglich.

Die Erfindung wird in einer bevorzugten Ausführungsform unter Bezugnahme auf eine Zeichnung beispielhaft beschreiben, wobei weitere vorteilhafte Einzelheiten der Figur der Zeichnung zu entnehmen sind.

Funktionsmäßig gleiche Teile sind dabei mit denselben Bezugszeichen versehen.

Die Figur der Zeichnung zeigt im Einzelnen:

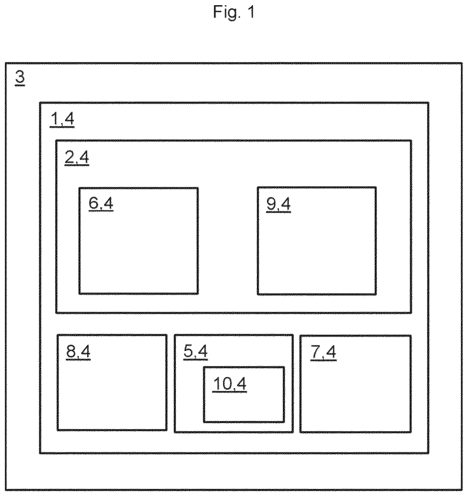

- **Figur 1**: System mit einer Maschine und einem Steuerungsrechner auf dem ein computerimplementiertes Verfahren durchführbar ist.

**Figur 1** zeigt ein System 3 mit einer Maschine 1 und einem Steuerungsrechner 2 auf dem ein computerimplementiertes Verfahren zur Steuerung der Maschine 1 durchführbar ist, wobei der Steuerungsrechner 2 in dieser Ausführungsform in der Maschine 1 integriert ist, beispielsweise innerhalb eines nicht dargestellten Schaltschrankes der Maschine 1 verbaut ist. Weiter umfasst die Maschine 1 ein Werkzeug 5, ein Human-Machine-Interface (HMI) 7, Sensormittel 8 und einen, in dem Steuerungsrechner 2 integrierten, Zwischenspeicher 9. Das Werkzeug 5 umfasst einen RFID-Chip 10 auf welchem Werkzeuggrunddaten des Werkzeuges 5 gespeichert sind. Das der Steuerungsrechner 2 umfasst weiter eine Datenbank 6. Sämtliche zuvor genannten Komponenten, die von dem System 3 umfasst sind, bilden jeweils für sich Teilsysteme 4 und sind über ein nicht dargestelltes Netzwerk derart miteinander verbunden, dass jedes Teilsystem 4 jedem anderem im System 3 befindlichen Teilsystem 4 Daten über das Netzwerk senden und von jedem anderem im System 3 befindlichen Teilsystem 4 Daten empfangen kann. Das System 3 kann eine Vielzahl an Maschinen 1 und eine Vielzahl an, von der Maschine 1 umfassten, Teilsysteme 4 umfassen.

### BEZUGSZEICHENLISTE

- 1: Maschine
- 2: Steuerungsrechner
- 3: System
- 4: Teilsystem
- 5: Werkzeug
- 6: Datenbank
- 7: Human-Machine-Interface (HMI)
- 8: Sensormittel
- 9: Zwischenspeicher
- 10: RFID-Chip

## Patentansprüche

1. Computerimplementiertes Verfahren zur Steuerung einer Maschine (1, 4), umfassend die folgenden Schritte:
e) Einlesen von neuen Grunddaten eines Werkzeuges (5, 4) und/oder eines Bewegungsvorgangs des Werkzeuges (5, 4);
f) Auslesen einer Datenbank (6, 4) nach früheren Grunddaten des Werkzeugs (5, 4) und/oder des Bewegungsvorganges;
g) Vergleichen der neuen Grunddaten und der früheren Grunddaten unter Ermittlung von Abweichungsdaten;
h) Verifizieren der neuen Grunddaten mittels der ermittelten Abweichungsdaten;
e1) Freigeben oder Blockieren des Werkzeuges (5, 4) unmittelbar nach dem Verifizieren der neuen Grunddaten und/oder vor dem Einsatz des Werkzeuges (5, 4) in der Maschine (1, 4) und/oder
e2) Freigeben oder Blockieren des Bewegungsvorgangs unmittelbar nach dem Verifizieren der neuen Grunddaten und/oder vor dem Durchführen des Bewegungsvorgangs in der Maschine (1, 4).

2. Verfahren nach Anspruch 1, umfassend den Schritt: Ausgeben mindestens eines Signals unmittelbar nach dem Verifizieren der neuen Grunddaten und/oder unmittelbar vor dem Durchführen des Bewegungsvorgangs und/oder vor dem Einsatz des Werkzeugs (5, 4) in der Maschine (1, 4).

3. Verfahren nach Anspruch 1 oder 2, umfassend den Schritt: Auffordern zur Korrektur der als nicht verifiziert geltenden neuen Grunddaten und/oder Bestätigung der als nicht verifiziert geltenden neuen Grunddaten.

4. Verfahren nach Anspruch 1, 2 oder 3, umfassend den Schritt: Protokollieren und Speichern mindestens des Verifizierungsschrittes und/oder des Korrekturschrittes.

5. Verfahren nach einem der vorhergehenden Ansprüche umfassend den Schritt: Überschreiben der früheren Grunddaten mit den neuen Grunddaten und/oder Speichern der neuen Grunddaten als frühere Grunddaten in der Datenbank (6, 4).

6. Verfahren nach einem der vorhergehenden Ansprüche, umfassend den Schritt: Speichern der neuen Grunddaten in einem Zwischenspeicher (9, 4) unmittelbar nach dem Einlesen.

7. Verfahren nach einem der vorhergehenden Ansprüche, wobei die Grunddaten Werkzeuggrunddaten und/oder Bewegungsvorgangsgrunddaten sind, wobei die Werkzeugrunddaten ausgewählt sind aus der Gruppe Anzahl an gespeicherten Werkzeugen (5, 4), Werkzeugbezeichnungen, Längenkorrekturdaten, Radiuskorrekturwerte, Bedienschritte, Nullpunktverschiebungen, wobei die Bewegungsvorgangsgrunddaten ausgewählt sind aus der Gruppe programmspezifischer Ablauf, Änderungen in der Ablaufkodierung.

8. Verfahren nach einem der vorhergehenden Ansprüche, wobei die neuen Grunddaten von der Eingabe eines Nutzers oder von RFID-Chips (10, 4) oder von Teilsystemen (4) eingelesen werden.

9. Verfahren nach einem der vorhergehenden Ansprüche, wobei skalare neue Grunddaten als verifiziert gelten, wenn die Abweichungsdaten unter einem Grenzwert liegen, wobei die skalaren neuen Grunddaten als nicht verifiziert gelten, wenn die Abweichungsdaten über dem Grenzwert liegen.

10. Verfahren nach Anspruch 9, wobei der Grenzwert in der Datenbank (6, 4) gespeichert ist.
